Europäisches Patentamt

European Patent Office

Office européen des brevets

(11) Veröffentlichungsnummer: **0 486 824 A1**

## (12) EUROPÄISCHE PATENTANMELDUNG

(21) Anmeldenummer: **91117911.7**

(22) Anmeldetag: **21.10.91**

(51) Int. Cl.5: **B60T 17/08**

Geänderte Patentansprüche gemäss Regel 86 (2) EPÜ.

(30) Priorität: **20.11.90 DE 4036961**

(43) Veröffentlichungstag der Anmeldung: **27.05.92 Patentblatt 92/22**

(84) Benannte Vertragsstaaten:
**DE ES FR GB IT NL**

(71) Anmelder: **KNORR-BREMSE AG**
**Moosacher Strasse 80 Postfach 401060**
**W-8000 München 40(DE)**

(72) Erfinder: **Claire, Michel**
**83 Rue Bellevue**
**F-92100 Boulogne Billancourt(FR)**

(54) **Kombinierter Betriebsbrems- und Federspeicherbremszylinder für Fahrzeuge.**

(57) Bei einem kombinierten Betriebsbrems- und Federspeicherbremszylinder (3,5) ist im Gehäuse (9) des Federspeicherbremszylindes (5) ein Federspeicherkolben (11) angeordnet, welcher unter der Einwirkung einer Speicherfeder (17) mittels einer eine Zwischenwand (7) zwischen Betriebsbremszylinder und Federspeicherbremszylinder durchsetzenden Druckstange (21) auf im Betriebsbremszylinder befindliche Bremsbetätigungsorgane einzuwirken vermag, derart, daß bei Entspannen der Speicherfeder (17) eine aus dem Betriebsbremszylinder sich erstreckende Druckstange (31) auf nachgeordnete Bremsbetätigungsorgane des Fahrzeuges einzuwirken vermag. Der Federspeicherkolben ist in der Öffnung einer Membrane (13) befestigt, welche an ihrem Außenumfang druckdicht am Gehäuse (9) des Federspeicherbremszylinders festgeklemmt ist. Um eine axiale Führung des Federspeicherkolbens (11) zu erreichen, weist dieser ein rückwärtig sich erstreckendes, glockenförmiges Führungsteil (33) auf, an dessen Außenumfang in Anlage mit dem Innenumfang des Gehäuses (9) befindliche Gleitstücke (35) unter Winkelabstand zueinander befestigt sind.

Fig. 1

EP 0 486 824 A1

Die Erfindung betrifft einen kombinierten Betriebsbrems- und Federspeicherbremszylinder nach dem Gattungsbegriff des Patentanspruches 1.

Kombinierte Betriebsbrems- und Federspeicherbremszylinder werden in Fahrzeugen, insbesondere Nutzfahrzeugen, verwendet, wobei mit Hilfe des Federspeicherbremszylinders die Möglichkeit der Parkbremsung gegeben ist; bei dieser Art der Bremsung wird der Federspeicherkolben mit Hilfe der Speicherfeder ausgefahren und wirkt mittels einer Druckstange auf Bremsbetätigungsorgane des Betriebsbremszylinders und auf eine weitere Druckstange ein, welche gegenüber dem Bremsmechanismus des Fahrzeugs zu wirken vermag.

Vereinfachte Ausführungen derartiger kombinierter Betriebsbrems- und Federspeicherbremszylinder sehen vor, daß der Federspeicherkolben als ein Membrankolben ausgebildet ist (US-PS-3 796 138), welcher lediglich als Stützelement für die Speicherfeder dient und Betätigungkräfte über die Membrane auf eine Druckstange zu übertragen vermag. Federspeicherkolben dieser Konstruktion weisen insbesondere bei Bremsbetätigung keinerlei axiale Führung auf; es ist lediglich im rückwärtigen Teil des Gehäuses des Federspeicherbremszylinders eine Konusführung vorgesehen, welche die Endlage des Federspeicherkolbens axial ausrichtet.

Um eine axiale Führung eines Federspeicherkolbens der beschriebenen Art in allen Funktionsstellungen zu erreichen, wurde bereits vorgeschlagen (DE-AS-23 16 594), eine feststehende Hülse zu verwenden, welche sich von der Rückwand des Federspeicherbremszylinders nach vorne gerichtet erstreckt und als Führung für den Innenumfang des Federspeicherkolbens dient. Eine derartige Führung ist baulich sehr aufwendig; zudem ist im Bereich zwischen Innenumfang des Federspeicherkolbens und Außenumfang der Führungshülse stets für eine gute Abdichtung zu sorgen.

Bekannt sind fernerhin Kombizylinder der gattungsgemäßen Art (US-PS-3 020 094), bei welchen der Federspeicherkolben in eine mittige Öffnung einer Wälzmembrane eingesetzt und an dieser befestigt ist, wobei der Federspeicherkolben eine Druckstange trägt, welche sich durch eine Zwischenwand zwischen Betriebsbremszylinder und Federspeicherbremszylinder erstreckt. Diese Druckstange vermag in bekannter Weise mittels eines Tellers auf Bremsbetätigungsorgane des Betriebsbremszylinders einzuwirken. Der Federspeicherbremszylinder dieser Konstruktion weist nahezu keine axiale, d.h. gegenüber Winkelbewegungen abgesicherte Führung auf, mit der Folge, daß durch die auf den Federspeicherkolben einwirkende Speicherfeder Kräfte unter Schräglage auf die Druckstange übertragen werden können. Als Folge davon kann ein erhöhter Verschleiß im Bereich der Durchführung der Druckstange in der Zwischenwand zwischen Betriebsbremszylinder und Federspeicherbremszylinder bzw. ein Verklemmen der Druckstange auftreten.

Davon ausgehend besteht die Aufgabe der Erfindung darin, einen kombinierten Betriebsbrems- und Federspeicherbremszylinder der gattungsgemäßen Art unter Verwendung baulich einfacher Mittel so auszugestalten, daß eine gute, verkantungsfreie Führung des Federspeicherkolbens in allen Funktionslagen sichergestellt ist. Zur Lösung dieser Aufgabe dienen die Merkmale nach dem Kennzeichnungsteil des Patentanspruches 1.

Das vom Federspeicherkolben rückwärts sich erstreckende, glockenförmige Führungsteil stellt ein einfaches Bauteil dar, an dessen Außenumfang die Gleitstücke aus Kunststoff unter Winkelabstand zueinander befestigt sind. Anstelle der Gleitstücke kann auch ein Gleit- und Führungsring aus vergleichbarem Material vorgesehen sein. In jedem Fall ist mit einer derartigen Maßnahme sichergestellt, daß der Federspeicherkolben unbeeinflußt bleibt von Kräften der Speicherfeder, welche zu einer geringen Schräglage und damit zu einem Verklemmen der Druckstange beitragen könnten. Die zur Führung dienenden Mittel sind von denkbar einfacher Art, da austauschbare Gleitstücke aus Kunststoff verwendet werden können. Ein besonderer Vorteil dieser Führung besteht auch darin, daß die Innenwand des Federspeicherbremszylinders keiner besonderen Bearbeitung bedarf, da die Gleitstücke keine Dichtfunktion ausüben. Bei geeigneter Dimensionierung der Membrane und des Führungsteils ist ermöglicht, daß in jeder Funktionsstellung des Federspeicherkolbens eine einwandfreie axiale Führung desselben erreicht wird.

Vorteilhafte Ausgestaltungen und Weiterbildungen sind in weiteren Patentansprüchen aufgeführt.

Die Erfindung ist nachfolgend anhand eines Ausführungsbeispiels unter Bezugnahme auf die beigefügte Zeichnung erläutert.

Fig.1 ist eine Längsschnittansicht des kombinierten Betriebsbrems- und Federspeicherbremszylinders gemäß der Erfindung, wobei in der oberen Schnitthälfte die ausgefahrene Position des Federspeicherkolbens wiedergegeben ist, während die untere Schnitthälfte die zurückgezogene Position des Federspeicherkolbens bei gespannter Speicherfeder wiedergibt;

Fig.2 ist eine rückwärtige Ansicht des Federspeicherkolbens unter Darstellung der unter Winkelabstand zueinander angeordneten Gleitstücke; und

Fig.3 ist eine vergrößerte Einzelschnittansicht unter Darstellung der Befestigung der Membrane zwischen dem Gehäusemittelteil und dem Gehäuse des Federspeicherbremszylinders, wobei am Gehäusemittelteil eine zur Erhöhung der Stabilität beitragende, verstärkende Rippe wiedergeben ist.

In der Zeichnung ist ein kombinierter Betriebsbrems- und Federspeicherbremszylinder, nachfolgend Kombizylinder 1 genannt, dargestellt; der Kombizylinder 1 besteht aus einem Betriebsbremszylinder 3 und einem Federspeicherbremszylinder 5, welche durch eine Zwischenwand 7 voneinander getrennt sind. Innerhalb des Gehäuses 9 des Federspeicherbremszylinders 5 ist ein Federspeicherkolben 11 angeordnet; der Federspeicherkolben ist in eine Membrane 13 eingeknöpft, welche an ihrem Außenumfang zwischen einem Gehäusemittelteil 15 des Kombizylinders und dem Gehäuse 9 eingeklemmt ist.

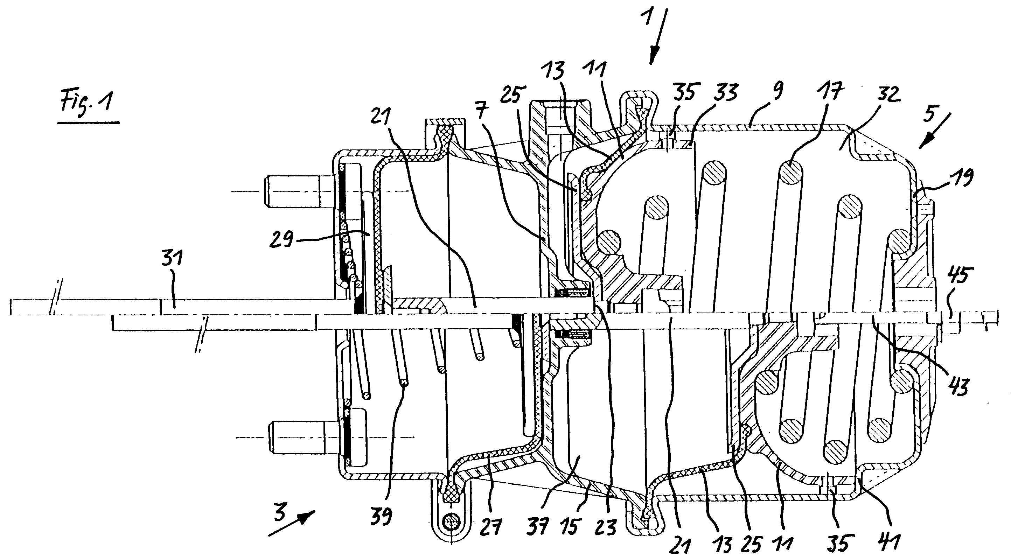

Im Inneren des Federspeicherbremszylinders befindet sich eine Speicherfeder 17, welche sich gemäß Darstellung nach Fig.1 mit einem Ende am Federspeicherkolben 11 und mit dem entgegengesetzten Ende am verstärkten Boden 19 des Gehäuses 9 abstützt. Gemäß Fig.1 erstreckt sich eine Druckstange 21 unter Abdichtung durch die Zwischenwand 7 des Kombizylinders und ist in eine mittige Öffnung des Federspeicherkolbens 11 eingeschraubt. Mittels einer an der Druckstange 21 ausgebildeten Schulter 23 ist hierbei ein zur Befestigung der Membrane 13 dienender Teller 25 zwischen der Druckstange und dem Federspeicherkolben verspannbar. An seinem Außenumfang stützt der Teller 25 die in eine Ausnehmung des Federspeicherkolbens 11 eingeknöpfte Membrane 13 druckdicht ab. Die Druckstange 21 erstreckt sich in den Betriebsbremszylinder 3, in welchem sich eine durch Druckluft beaufschlagbare Membrane 27 von an sich bekannter Konstruktion befindet. Die Membrane wirkt gegenüber einem Membranteller 29, welcher mit einer weiteren, aus dem Kombizylinder sich erstreckenden Druckstange 31 verbunden ist. Die Druckstange 31 ist in an sich bekannter Weise durch den Betriebsbremszylinder bzw. den Federspeicherbremszylinder beaufschlagbar und wirkt gegenüber einem (nicht dargestellten) Bremsmechanismus des Fahrzeugs. Die obere Schnitthälfte von Fig.1 gibt die ausgefahrene Position der Druckstange 31 wieder, während die untere Schnitthälfte die zurückgefahrene Position darstellt. Die Wirkungsweise des Betriebsbremszylinders bzw. das Zusammenwirken mit dem Federspeicherbremszylinder sind von an sich bekannter Art, weshalb eine ins einzelne gehende Beschreibung entbehrlich ist.

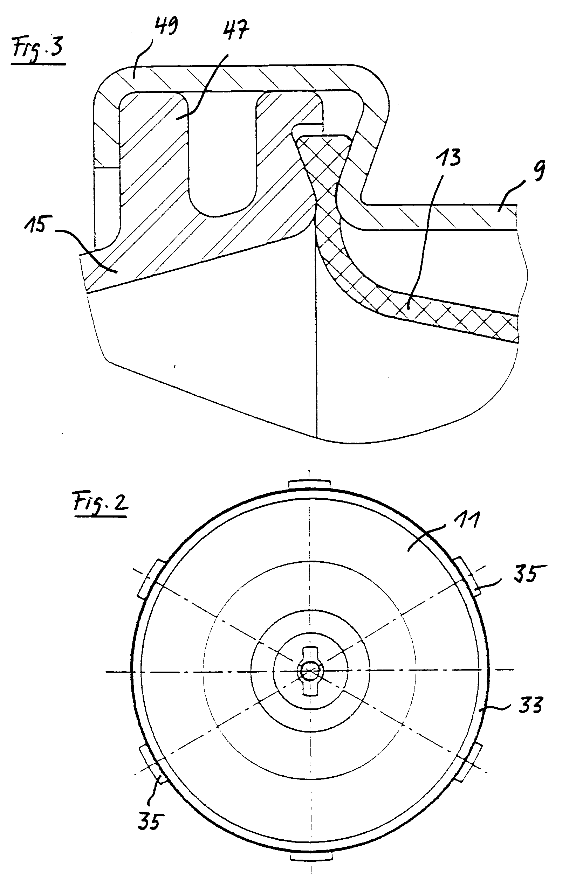

Gemäß der Erfindung ist der als Membrankolben bzw. Mittelteil der Membrane wirkende Federspeicherkolben 11 an seinem Außenumfang gegenüber dem Gehäuse 9 geführt. Der Federspeicherkolben ist glockenförmig ausgebildet, d.h. er weist ein rückwärtig in der Federspeicherkammer 32 sich erstreckendes Führungsteil 33 auf, an welchem gemäß Fig.2 unter Winkelabstand zueinander Gleitstücke 35 eingesetzt sind. Die Gleitstücke können aus Kunststoff oder dgl. Materialien bestehen, wie sie z.B. für Führungsringe vorgesehen sind, und können unter Klemmsitz in zugeordnete Bohrungen im Führungsteil 33 des Federspeicherkolbens eingepreßt oder auf sonstige Weise in diesen Bohrungen befestigt sein. Anstelle der Gleitstücke 35 kann auch ein um den ganzen Umfang sich erstreckender Gleit- und Führungsring vorgesehen sein, welcher am Außenumfang des Führungsteils eingesetzt ist. Die beschriebene Führung des Federspeicherkolbens 11 am Innenumfang des Gehäuses 9 wird ständig aufrechterhalten, d.h. die Abmessungen der Membrane und des Führungsteils 33 des Federspeicherkolbens 11 sind so gehalten, daß die Gleitstücke 35 sowohl in der zurückgezogenen Position (untere Schnitthälfte nach Fig.1) als auch in der ausgefahrenen Position (obere Schnitthälfte nach Fig.1) am Innenumfang des Gehäuses 9 anliegen. Eine Schräglage des Federspeicherkolbens mit daraus folgender Verkantung der Druckstange 21 ist also in jedem Betriebszustand des Kombizylinders ausgeschlossen.

In der oberen Schnitthälfte von Fig.1, welche die ausgefahrene Position des Federspeicherkolbens darstellt, befinden sich die Gleitstücke 35 nahe des Bereiches der Einspannung der Membrane 13. Die mit dem Federspeicherkolben 11 verbundene Druckstange 21 ist vollständig ausgefahren, d.h. sie wirkt gegenüber dem Membranteller 29 des Betriebsbremszylinders derart, daß die Druckstange 31 zur Betätigung einer (nicht dargestellten) Bremsanordnung ebenfalls ausgefahren ist. Wird ausgehend von dieser Position die Lösekammer 37 des Federspeicherbremszylinders über einen (nicht dargestellten) Druckluftanschluß mit Druckluft beaufschlagt, so wird der Federspeicherkolben unter Mitnahme der mit ihm verbunden Druckstange 21 gegen die Kraft der Speicherfeder 17 die in der unteren Schnitthälfte von Fig.1 dargestellte Lage zurückgeschoben. Dieser Bewegung folgt der Membranteller 29 des Betriebsbremszylinders (bei entlüfteter Druckkammer des Betriebsbremszylinders), welcher durch die in der Zeichnung wiedergegebene Rückstellfeder 37 beaufschlagt wird. In der zurückgeschobenen Lage wirkt eine als Anschlag 41 dienende Einschnürung am Gehäuse 9 gegenüber dem Ende des Führungsteils 33, wie aus der unteren Schnittansicht in Fig.1 zu ersehen ist. Hierdurch ist die Endlage des Federspeicherkolbens bei zusammengedrückter Speicherfeder gegeben.

Der Federspeicherkolben 11 weist an seiner Rückseite im Bereich einer mittigen Verdickung eine Ausnehmung an sich bekannter Konstruktion auf, in welche zum Zwecke des Notlösens des Federspeicherkolbens eine Notlösespindel 43 einführbar ist. Die Notlösespindel 43 kann durch eine im Boden des Gehäuses 9 befindliche Öffnung eingeführt werden, um den Kolben in bekannter Weise aus der in oberen Schnitthälfte von Fig.1 dargestellten Position in die in der unteren Schnitthälfte wiedergegebene Lage zurückzuholen, was durch Verschrauben einer Mutter 45 auf der Notlösespindel 43 geschieht.

Es ist von Vorteil, wenn für den Federspeicherkolben eine große axiale Führungslänge am Gehäuse 9 existiert. Da das Gehäuse 9 am Mittelteil 15 befestigt ist, sind Maßnahmen erforderlich, welche den Mittelteil mit ausreichender Stabilität versehen. Dies geschieht gemäß Fig.3 im Bereich der Klemmverbindung der Membrane 13 mittels einer ringförmigen, versteifenden Rippe 47, welche materialeinheitlich am Gehäusemittelteil ausgebildet ist und vorzugsweise von der zur Verbindung dienenden Lasche 49 des Gehäuses umfaßt wird. Es kann auch eine an sich bekannte Spannbandkonstruktion vorgesehen sein, welche zur Verbindung von Gehäusemittelteil und Gehäuse 9 bei gleichzeitiger druckdichter Verklemmung der Membrane 13 verwendet wird.

## Bezugszeichenliste

| | |
|---|---|
| 1 | Kombizylinder |
| 3 | Betriebsbremszylinder |
| 5 | Federspeicherbremszylinder |
| 7 | Zwischenwand |
| 9 | Gehäuse |
| 11 | Federspeicherkolben |
| 13 | Membrane |
| 15 | Gehäusemittelteil |
| 17 | Speicherfeder |
| 19 | Boden |
| 21 | Druckstange |
| 23 | Schulter |
| 25 | Teller |
| 27 | Membrane |
| 29 | Membranteller |
| 31 | Druckstange |
| 32 | Federspeicherkammer |
| 33 | Führungsteil |
| 35 | Gleitstück |
| 37 | Lösekammer |
| 39 | Rückstellfeder |
| 41 | Anschlag |
| 43 | Notlösespindel |
| 45 | Mutter |
| 47 | Rippe 49 Lasche |

## Patentansprüche

1. Kombinierter Betriebsbrems- und Federspeicherbremszylinder für Fahrzeuge, mit einem im Gehäuse des Federspeicherbremszylinders angeordneten, von einer Speicherfeder beaufschlagbaren Federspeicherkolben, welcher in der Öffnung einer an ihrem Außenumfang am Gehäuse des Federspeicherbremszylinders verklemmten Membrane befestigt ist, derart, daß der Federspeicherkolben zusammen mit der Membrane das Innere der Federspeicherbremszylinders in eine Lösekammer und eine Federspeicherkammer unterteilt, dadurch gekennzeichnet, daß der Federspeicherkolben an der Innenwand des Gehäuses (9) des Federspeicherbremszylinders (5) axial beweglich geführt ist.

2. Kombinierter Betriebsbrems- und Federspeicherbremszylinder nach Anspruch 1, dadurch gekennzeichnet, daß der Federspeicherkolben (11) ein glockenförmiges, rückwärtig in der Federspeicherkammer (32) sich erstreckendes Führungsteil (33) aufweist, welches an seinem Außenumfang in Anlage mit dem Innenumfang des Gehäuses (9) befindliche Führungsmittel aufweist.

3. Kombinierter Betriebsbrems- und Federspeicherbremszylinder nach Anspruch 2, dadurch gekennzeichnet, daß die Führungsmittel aus Gleitstücken (35) bestehen, welche unter Winkelabstand zueinander am Außenumfang des Führungsteils (33) befestigt sind.

4. Kombinierter Betriebsbrems- und Federspeicherbremszylinder nach Anspruch 3, dadurch gekennzeichnet, daß die Gleitstücke (35) aus Kunststoff bestehen.

5. Kombinierter Betriebsbrems- und Federspeicherbremszylinder nach Anspruch 3, dadurch gekennzeichnet, daß die Führungsmittel aus einem am Umfang des Führungsteils (33) befestigten Gleit- und Führungsring bestehen.

6. Kombinierter Betriebsbrems- und Federspeicherbremszylinder nach einem der vorangehenden Ansprüche, dadurch gekennzeichnet, daß im rückwärtigen Bereich des Gehäuses (9) ein als Gehäuseeinschnürung ausgebildeter Anschlag (41) für das Führungsteil (33) vorgesehen ist.

Fig. 1

Fig. 3

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-A-1 936 868 (JARMUFEJLESZTE)<br>* Seite 5, Zeile 18 - Seite 6, Zeile 10; Abbildung 1 *<br>--- | 1 | B60T17/08 |
| A | EP-A-0 009 961 (ECHLIN)<br>* Seite 6, Zeile 12 - Zeile 19; Abbildung 1 *<br>--- | 1,2,3,6 | |
| A | EP-A-0 320 606 (WABCO)<br>* Abbildung 1 *<br>--- | 1,2 | |
| A | FR-A-2 265 010 (AEROQUIP)<br>* Seite 6, Zeile 10 - Zeile 13; Abbildung 1 *<br>--- | 5 | |
| A | DE-A-3 518 830 (KNORR-BREMSE)<br>* Abbildung 1 *<br>--- | 6 | |
| A | DE-A-3 241 548 (BOSCH)<br>* Abbildung 1 *<br><br>----- | 6 | |
| | | | **RECHERCHIERTE SACHGEBIETE (Int. Cl.5 )**<br><br>B60T |

Der vorliegende Recherchenbericht wurde für alle Patentansprüche erstellt

| Recherchenort | Abschlußdatum der Recherche | Prüfer |
|---|---|---|
| BERLIN | 04 FEBRUAR 1992 | BLURTON M.D. |

EPO FORM 1503 03.82 (P0403)